# EUROPEAN PATENT APPLICATION

(11) **EP 4 838 543 A1**
(43) Date of publication of application: **11.11.2026**
(21) Application number: 24915544.1
(22) Date of filing: 29.11.2024
(51) Int. Cl.: H01B 7/18, H01B 7/14, H02G 1/10, H01B 7/02, H01B 3/08, H01B 3/48

(54) **LIGHTWEIGHT SUBMARINE CABLE AND ARMOR WIRE USED THEREFOR**

(30) Priority: 04.01.2024 KR 20240001503; 26.11.2024 KR 20240170798
(71) Applicant: LS Cable & System Ltd., Anyang-si, Gyeonggi-do 14119 (KR)
(72) Inventor: LIM, Young Seok, Gunpo-si, Gyeonggi-do 15845 (KR); KIM, Tea Seong, Gunpo-si, Gyeonggi-do 15845 (KR); NAM, Woong Shik, Gunpo-si, Gyeonggi-do 15845 (KR); CHO, Sung Ho, Gunpo-si, Gyeonggi-do 15845 (KR)
(74) Representative: K&L Gates LLP
(86) International application number: PCT/KR2024/019323
(87) International publication number: WO 2025/146961

(57) **Abstract**

Disclosed are a lightweight submarine cable and an armor wire used therefor. The armor wire may be wound around a power unit to form an armor layer. The armor wire may include a core portion and a cover portion. The core portion may include a bundle of first fibers. The cover portion may include a second fiber which is transversely wound around the core portion.

## Description

### [Technical Field]

The present invention relates to a cable laid on a seabed and an armor wire used therefor.

### [Background Art]

A submarine cable is a cable laid underwater to transmit power between two points separated by the sea, such as between continents or between land and an island.

When a submarine cable is laid in the sea reaching depths of thousands of meters, the submarine cable is exposed to significant tensile forces. These tensile forces are exerted on the cable by its own weight as it hangs vertically. To prevent the cable from being damaged or broken due to these tensile forces, the armor of the cable may be reinforced. For example, steel wires of the armor may be made thicker (heavier).

However, reinforcing the steel wires of the armor also increases the weight of the cable. Due to this increased weight, the cable is subjected to even greater tensile forces. This creates a vicious cycle in which the cable should be further reinforced. Consequently, it is extremely difficult to manufacture cables to be laid in deep sea within the concept of conventional steel wire armor.

The above-described background art is technical information retained by the inventor to derive the embodiments of the present invention or acquired by the inventor while deriving the present invention, and thus should not be construed as art that was publicly known prior to the filing date of the present invention.

### [Disclosure]

### [Technical Problem]

An object of the present invention is to provide a lightweight submarine cable having a new concept of armor that departs from the concept of conventional steel wire armor, and an armor wire used therefor.

Another object of the present invention is to provide a lightweight submarine cable having an armor layer with an improved ratio of tensile strength to weight compared to steel wire armor, and an armor wire used therefor.

### [Technical Solution]

According to an aspect of the present invention, a lightweight submarine cable includes: at least one power unit and a protective unit surrounding the at least one power unit, in which the power unit includes a conductor, an inner semi-conductive layer surrounding the conductor, an insulating layer surrounding the inner semi-conductive layer, an outer semi-conductive layer surrounding the insulating layer, and a metal shielding layer surrounding the outer semi-conductive layer, the protective unit includes a bedding layer surrounding the at least one power unit, an armor layer surrounding the bedding layer, and an outermost layer surrounding the armor layer, the armor layer includes a plurality of armor wires transversely wound outside the bedding layer, and the armor wire includes a core portion having a bundle of first fibers and a cover portion having a second fiber transversely wound around the core portion.

Here, the armor wire may be formed by transversely winding the second fiber while the bundle of the first fibers is being pulled in a longitudinal direction.

Here, the second fibers may be transversely wound while pulled in a longitudinal direction.

Here, the armor wire may have a space factor of 80% or more.

Here, the second fiber may be transversely wound around the first fiber at a pitch angle of 3° or more.

Here, the bundle of the first fibers may be formed by straight-plying a plurality of first fibers.

Here, the second fiber may be provided in a bundle, and the bundle of the second fiber may be formed by twisting a plurality of second fibers.

Here, the second fiber may include a 2-1 fiber bundle and a 2-2 fiber bundle, and the cover portion may include a first cover portion in which the 2-1 fiber bundle is transversely wound around the core portion along a first direction, and a second cover portion in which the 2-2 fiber bundle is transversely wound around the core portion along a second direction.

Here, the first fiber may be formed of at least one of aramid and UHMWPE.

Here, the second fiber may be formed of at least one of aramid, UHMWPE, PET, glass fiber, and carbon fiber.

Here, a diameter of the core portion may be 40 to 80 times that of the cover portion.

Here, the first fiber and the second fiber may be the same type of fiber.

Here, the power unit may further include a polymer sheath surrounding the metal shielding layer.

According to another aspect of the present invention, an armor wire used for a lightweight submarine cable and configured to surround a power unit of the submarine cable to form an armor layer, the armor wire includes: a core portion having a bundle of first fibers; and a cover portion having a second fiber that is transversely wound around the core portion.

Here, while a bundle of the first fibers is being pulled in a longitudinal direction, the second fiber may be transversely wound around the bundle of the first fibers in a state that the second fiber is pulled in the longitudinal direction.

Here, the bundle of the first fibers may be formed by straight-plying a plurality of first fibers.

Here, the second fiber may be provided in a bundle, and the bundle of the second fibers may be formed by twisting a plurality of second fibers.

Here, the second fiber may be provided in a bundle, the bundle of second fibers may include a bundle of 2-1 fibers and a bundle of 2-2 fibers, and the cover portion may include a first cover portion in which the bundle of the 2-1 fibers is transversely wound around the core portion along a first direction, and a second cover portion in which the bundle of the 2-2 fibers is transversely wound around the core portion along a second direction.

According to still another aspect of the present invention, a lightweight submarine cable includes: at least one power unit and a protective unit surrounding the at least one power unit, in which the power unit includes a conductor, an inner semi-conductive layer surrounding the conductor, an insulating layer surrounding the inner semi-conductive layer, an outer semi-conductive layer surrounding the insulating layer, and a metal shielding layer surrounding the outer semi-conductive layer, the protective unit includes a bedding layer surrounding the at least one power unit, an armor layer surrounding the bedding layer, and an outermost layer surrounding the armor layer, the armor layer includes a plurality of armor wires transversely wound outside the bedding layer, the armor wire includes a fiber assembly in which a first fiber and a second fiber are combined, and the second fiber is transversely wound around the first fiber to compress the first fiber.

Here, the armor wire may be formed by transversely winding the second fiber around the first fiber while the first fiber is being pulled in a longitudinal direction and the second fiber is being pulled in the longitudinal direction relative to the first fiber.

Here, the second fiber may be transversely wound around the first fiber at a pitch angle of 3° or more.

Here, the first fiber and the second fiber may be the same type of fiber.

### [Advantageous Effects]

According to the lightweight submarine cable and the armor wire used therefor according to the present invention configured as described above, the armor wire of the protective unit surrounding the power unit includes a core portion having a bundle of first fibers and a cover portion having second fibers transversely wound around the core portion, and thus, the armor layer may be manufactured by a new concept of fiber assembly, departing from the concept of conventional steel wire armor.

A fiber armor layer may have a ratio of tensile strength to weight higher than that of steel wire armor. Accordingly, the lightweight submarine cable may be laid stably and easily even in deep sea reaching depths of thousands of meters.

### [BRIEF DESCRIPTION OF THE DRAWINGS]

FIG. 1 is a cross-sectional view illustrating a configuration of a lightweight submarine cable according to an embodiment of the present invention.
FIG. 2 is a front view of an armor wire of FIG. 1.
FIG. 3 is a cross-sectional view of the armor wire of FIG. 2.
FIG. 4 is a cross-sectional view of an armor wire according to one modified example of the armor wire of FIG. 3.
FIG. 5 is a front view of an armor wire according to another modified example of the armor wire of FIG. 2.
FIG. 6 is a cross-sectional view illustrating a configuration of a lightweight submarine cable according to one modified example of the lightweight submarine cable of FIG. 1.
FIG. 7 is a cross-sectional view illustrating a configuration of a lightweight submarine cable according to another embodiment of the present invention.

### [Best Mode]

Hereinafter, preferred embodiments of the present invention will be described in detail with reference to the accompanying drawings.

The present invention is not limited to embodiments set forth herein, but may be modified in various different forms. However, the present embodiment is provided merely to ensure that the disclosure of the present invention is complete and to fully inform those skilled in the art of the scope of the invention. Accordingly, the present invention is not limited to the embodiments disclosed hereinafter, and it should be understood that not only may the configuration of one embodiment be substituted with or added to the configuration of another embodiment, but also that the present invention includes all modifications, equivalents, and substitutes falling within the technical spirit and scope of the present invention.

It should be understood that the accompanying drawings are provided only in order to allow embodiments disclosed in the present specification to be easily understood, and the teachings disclosed in the present specification are not limited by the accompanying drawings, but includes all the modifications, equivalents, and substitutions included in the teachings and the scope of the present invention. In the drawings, components may be exaggerated in size or thickness for ease of understanding, but this should not be construed as limiting the scope of protection of the present invention.

Terms used in the present specification are used only in order to describe specific implementation examples or embodiments rather than limiting the present invention. Singular expressions are intended to include plural expressions unless the context clearly indicates otherwise. In the specification, terms such as "~comprising" or "~including" are intended to specify the presence of stated features, numbers, steps, operations, components, parts, or combinations thereof described in the specification. That is, it should be understood that terms such as "~comprising" or "~ including" in the specification do not preclude the existence or addition possibility of one or more other features or numbers, steps, operations, components, parts, or combinations thereof.

Terms including ordinal numbers such as "first", "second", etc., may be used to describe various components, but the components are not to be construed as being limited to the terms. The terms are used to distinguish one component from another component.

It is to be understood that when one element is referred to as being "connected to/communicate with" or "coupled to" another element, it may be directly connected to/communicate with another element or be coupled to another element, having the other element intervening therebetween. On the other hand, it should be understood that when one element is referred to as being "directly connected to/communicate with" or "coupled directly to" another element, it may be connected to or coupled to another element without the other element interposed therebetween.

When a component is referred to as being "above" or "below" another component, it should be understood that it is not only positioned directly above that other component, but also that other components may be present in between.

Unless indicated otherwise, it is to be understood that all the terms used in the specification including technical and scientific terms have the same meaning as those that are generally understood by those skilled in the art. Terms generally used and defined by a dictionary should be interpreted as having the same meanings as meanings within a context of the related art and should not be interpreted as having ideal or excessively formal meanings unless being clearly defined otherwise in the present specification.

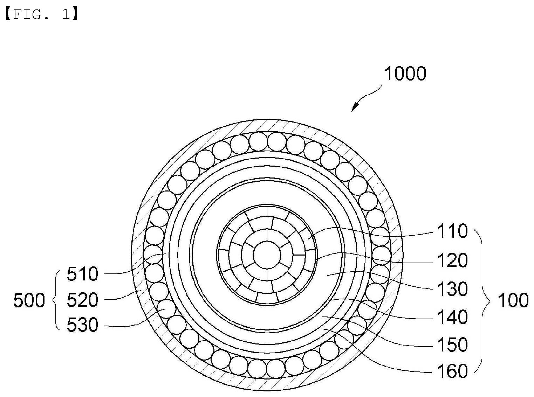

FIG. 1 is a cross-sectional view illustrating a configuration of a lightweight submarine cable according to an embodiment of the present invention.

Referring to the present drawing, a submarine cable 1000 has a power unit 100 that forms a conductive path through which current flows. In this embodiment, a single-phase cable is exemplified in which the power unit 100 is provided as a single unit.

The power unit 100 may include a conductor 110, an inner semi-conductive layer 120, an insulating layer 130, an outer semi-conductive layer 140, a metal shielding layer 150, and a polymer sheath 160. These components 110 to 160 are disposed sequentially along a radial direction from a center of the power unit 100. In this embodiment, the power unit 100 is described as having six components (layers), but the present invention is not limited thereto. Some of the components may be removed or other layers may be added as needed.

The conductor 110 is a component that serves as a passage through which current flows. The conductive path may be formed along an extension direction of the conductor 110. The conductor 110 may be made of a material having excellent conductivity and strength and flexibility suitable for cable manufacturing and use. The conductor 110 may be made of, for example, copper (Cu) or aluminum (Al).

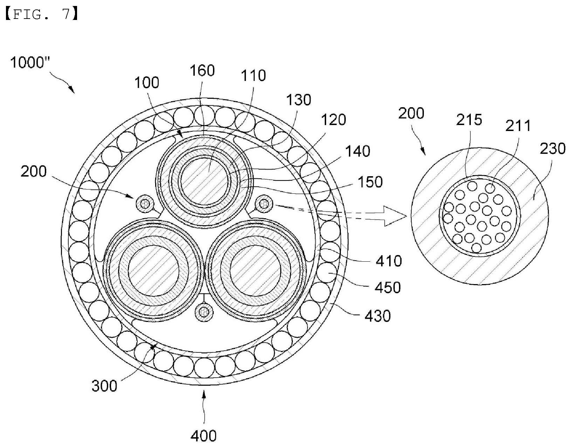

The conductor 110 includes a circular central wire and a flat wire layer comprising flat wires stranded to surround the circular central wire, as illustrated in the drawing. The conductor 110 may be a flat conductor having a circular cross-section overall. The flat conductor has a higher space factor compared to a circular compressed conductor, providing the advantage of being able to reduce an outer diameter of the cable. The circular compressed conductor is formed by stranding a plurality of circular wires and compressing the circular wires into a circle, and may be used as the conductor 110 in place of the flat conductor (see FIG. 7).

The conductor 110 has a surface that is not smooth, so the electric field formed thereon may be uneven, and corona discharge may partially occur. When a gap is formed between a surface of the conductor 110 and the insulating layer 130 described later, the insulation performance may be degraded.

To solve this problem, the conductor 110 may be surrounded by an inner semi-conductive layer 120. The inner semi-conductive layer 120 has semiconducting properties by adding conductive particles to an insulating material. Examples of the conductive particles may be carbon black, carbon nanotubes, carbon nanoplates, graphite, etc.

The inner semi-conductive layer 120 prevents a sudden change in the electric field between the conductor 110 and the insulating layer 130 by suppressing the formation of the gap between the conductor 110 and the insulating layer 130, thereby stabilizing the insulation performance of the insulating layer 130. The inner semi-conductive layer 120 may also suppress the uneven charge distribution of the conductor 110, thereby making the electric field uniform, and prevent the formation of the gap between the conductor 110 and the insulating layer 130, thereby suppressing corona discharge, insulation breakdown, etc.

The insulating layer 130 is configured to be provided on the outside of the inner semi-conductive layer 120 to electrically insulate the conductor 110 from the outside. Generally, the insulating layer 130 should have a high breakdown voltage and be able to maintain its insulation performance stably for a long period. The insulating layer 130 should also have low dielectric loss and possess thermal resistance performance such as heat resistance. In this regard, polyolefin resins such as polyethylene and polypropylene may be used as the insulating layer 130. The polyethylene resin may be a cross-linked resin.

An outer semi-conductive layer 140 may be provided on the outside of the insulating layer 130. The outer semi-conductive layer 140 is formed of a semi-conductive material, similar to the inner semi-conductive layer 120. The outer semi-conductive layer 140 stabilizes the insulation performance of the insulating layer 130 by suppressing the uneven charge distribution between the insulating layer 130 and the metal shielding layer 150 described later. Additionally, the outer semi-conductive layer 140 may perform the function of physically protecting the insulating layer 130 by smoothing the surface of the insulating layer 130 in the cable to alleviate electric field concentration and prevent corona discharge.

The power unit 100 may additionally be provided with a moisture absorption part (not illustrated) to prevent moisture from penetrating into the cable. The moisture absorption part may be disposed between the wires constituting the conductor 110 and/or on the outside of the conductor 110. The moisture absorption part may be made of a material that has a fast rate of absorbing moisture penetrating the cable and excellent ability to maintain the absorption state. The above material may be, for example, a powder, tape, coating layer, or film containing a super absorbent polymer (SAP). The moisture absorption part may serve to prevent moisture from penetrating along the length of the cable. The moisture absorption part may also have semi-conductive properties to prevent sudden changes in the electric field.

A metal shielding layer 150 may be provided on the outside of the outer semi-conductive layer 140. The metal shielding layer 150 may protect the conductor 110, the inner semi-conductive layer 120, the insulating layer 130, and the outer semi-conductive layer 140 (hereinafter referred to as 'core layers') from various environmental factors such as moisture penetration, mechanical damage, and corrosion, as well as fault currents, which may affect the power transmission performance of the cable. The metal shielding layer 150 is grounded at the end of the cable and serves as a passage for a fault current to flow when an accident such as a ground fault or short circuit occurs, protects the cable from external impact, and shields the electric field so that the electric field is not discharged outside the cable.

In the case of a submarine cable, the metal shielding layer 150 is formed to seal the core layers, thereby preventing foreign substances such as moisture from penetrating and degrading the insulation performance. For example, when a seamless, continuous outer surface is formed by extruding molten metal onto the core layers, the water-blocking performance of the core layers may be improved. Lead, aluminum, or the like may be used as the metal. In the case of the submarine cable, lead, which has excellent corrosion resistance to seawater, may be used. Additionally, a lead alloy with added metal elements may be used to supplement mechanical properties.

A copper-wire embedded tape (not illustrated) or a moisture absorption layer (not illustrated) may be additionally provided between the metal shielding layer 150 and the outer semi-conductive layer 140. The copper-wire embedded tape may comprise copper-wire and non-woven tape, etc., to facilitate electrical contact between the outer semi-conductive layer 140 and the metal shielding layer 150. The above moisture absorption layer (not illustrated) may be formed in the form of a powder, tape, coating layer, film, or the like containing a super absorbent polymer (SAP) that has a fast rate of absorbing moisture penetrating the cable and excellent ability to maintain the absorbed state. The moisture absorption layer may prevent moisture from penetrating along the length of the cable. To prevent the abrupt changes in the electric field in the moisture absorption layer, the moisture absorption layer may include copper wire.

The polymer sheath 160 may be formed to surround the metal shielding layer 150. The polymer sheath 160 may be formed of a resin such as polyvinyl chloride (PVC) or polyethylene. The polymer sheath 160 may perform the function of improving the corrosion resistance, the water-blocking performance, etc., of the submarine cable and protecting the cable from mechanical damage and other external environmental factors such as heat and ultraviolet rays.

A protective unit 500 is additionally provided for protection of the power unit 100. The protective unit 500 protects the power unit 100 against harsh environments, such as seawater, salinity, and external forces (e.g., pressure or tensile forces applied during cable laying), in a cable installed across the seabed.

The protective unit 500 is formed to surround the power unit 100. The protective unit 500 is formed to extend along the longitudinal direction of the cable. The protective unit 500 may include a bedding layer 510, an armor layer 530, and an outermost layer 520. These components 510 to 530 may be disposed sequentially along the radial direction from the center of the protective unit 500. In this embodiment, the protective unit 500 is described as having three components (layers), but the present invention is not limited thereto. Some of the components may be removed or other layers may be added as needed.

The bedding layer 510 may be formed by transversely winding a non-woven tape around the outer surface of the power unit 100. The outer surface of the cable is occupied by the outermost layer 520. The outermost layer 520 may be formed of a polymer material or may have substantially the same configuration as the bedding layer 510. An armor layer 530 may be disposed between the bedding layer 510 and the outermost layer 520, specifically on the outside of the bedding layer 510. The armor layer 530 improves the tensile strength relative to the weight of the submarine cable 1000. Due to this armor layer 530, the submarine cable 1000 may not be damaged or broken by its own weight when laid in deep sea. Another layer may be added between the bedding layer 510 and the armor layer 530. Even in that case, the armor layer 530 is positioned outside the bedding layer 510.

The armor layer 530 may be formed by transversely winding the armor wire around the outside of the bedding layer 510. A plurality of armor wires may be employed.

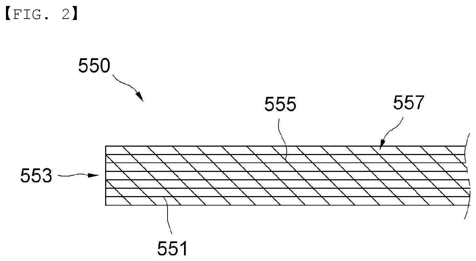

The specific configuration of the armor wires will be described with reference to FIGS. 2 to 5.

FIG. 2 is a front view of the armor wire of FIG. 1.

Referring to FIG. 2, the armor wire 550 is formed from a fiber material rather than a metal material. Specifically, the armor wire 550 may be a fiber assembly formed by combining two types of fibers 551 and 545. Here, the fiber may be formed by combining a plurality of filaments to have a constant denier. The second fiber 555 may be disposed on the outside of the first fiber 551, and accordingly, the first fiber 551 may be disposed on the inside of the second fiber 555. Due to this arrangement relationship, the first fiber 551 may form a core portion 553, and the second fiber 555 may form a cover portion 557 that surrounds the core portion 553.

When the first fiber 551 extends in the longitudinal direction in the core portion 553, the second fiber 555 forming the cover portion 557 may be transversely wound around the core portion 553. The second fiber 555 may be transversely wound at a pitch angle of 3° or more. When the pitch angle is less than 3°, the force of the cover portion 557 holding the core portion 553 may be insufficient.

One or more first fibers 551 may be provided. When a plurality of first fibers 551 are provided, the tensile strength of the core portion 553 may be improved. The plurality of first fibers 551 may be straight-plied. The straight-plying refers to the case where a plurality of fibers are plied so that they are nearly parallel to each other. For example, the straight-plying may be a case where the pitch angle between the plurality of fibers is less than 3°. When the pitch angle is 3° or more, the plurality of first fibers 551 become spun, and may be unraveled by the tensile force applied in the longitudinal direction. Spinning refers to combining and twisting two strands of fiber to form a new single strand. When the first fiber 551 is unraveled, the core portion 553, and furthermore the armor wire 550, will stretch, which may cause a problem where a greater tensile force is applied to the conductor 110. The plurality of first fibers 551 may also be referred to as a bundle of first fibers.

As the plurality of first fibers 551 are straight-plied, the following relationship may be satisfied when L is the length of the armor wire and Lo is the length of the first fiber constituting the first fiber bundle.$1 \leq Lo / L \leq 1.01$

Meanwhile, in terms of material, the first fiber 551 may be made of a synthetic resin that is lightweight and has high tensile strength. For example, the first fiber 551 may be a synthetic fiber made of aramid and/or ultra-high-molecular-weight polyethylene (UHMWPE). Aramid is a general term for aromatic polyamide fibers that are distinct from aliphatic polyamides (nylon), and is strong and resistant to heat. The aramid is a fiber that has heat resistance that does not burn even at 500°C and strong chemical resistance to chemicals, and is called a 'super fiber' because it is the strongest among fibers. A piece of aramid cut to a size of 1 mm² (approximately 1.6 mm in diameter) may lift 350 kg. Currently, the aramid is produced by companies such as DuPont (Kevlar) in the U.S., Teijin (Twaron) in Japan, and Kolon (Heracron) in Korea. The UHMWPE is a special PE product with a molecular weight of over one million. Due to its ultra-high molecular weight, the UHMWPE possesses excellent mechanical properties.

The second fiber 555 may be a synthetic fiber made of, for example, polyethylene terephthalate (PET), glass fiber, and carbon fiber, in addition to the aramid and UHMWPE. The second fiber 555 may be made of the same material as the first fiber 551 or may be made of a different material from the first fiber 551. Since the tensile force applied to the fiber assembly is mainly borne by the core portion 553, the cover portion 557 may have a tensile strength equal to or lower than that of the core portion 553.

In order to increase the tensile strength of the armor wire 550 while keeping it compact, the first fiber 551 may be in a state where it is pulled in the longitudinal direction. Specifically, while the first fiber 551 is pulled in the longitudinal direction, the second fiber 555 may be transversely wound around the first fiber 551. The second fiber 555 may also be transversely wound while being pulled in the longitudinal direction to compress the first fiber 551. With this configuration of the armor wire 550, the armor wire 550 may have a space factor of 80% or more. The armor wire 550 has a higher tensile strength-to-weight ratio than metal and exhibits low elongation in the longitudinal direction when subjected to external force.

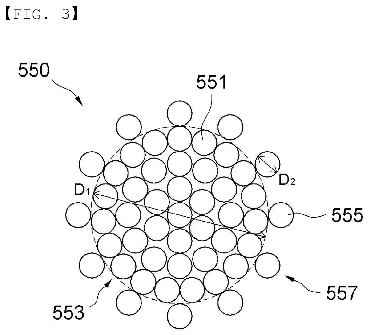

FIG. 3 is a cross-sectional view of the armor wire of FIG. 2.

Referring to FIG. 3, the cover portion 557 formed by the second fiber 555 may be arranged along the circumferential direction of the core portion 553 formed by the first fiber 551.

A diameter D₂ of the cover portion 557 may be significantly smaller than a diameter D₁ of the core portion 553. D₂ is the diameter of the second fiber 555 or the thickness of the cover portion 557. For example, D₁ may be 40 to 80 times D₂.

When D₂ is less than 1/80 of D₁, the cover portion 557 may lack the force to protect or compress the core portion 553. When D₂ exceeds 1/40 of D₁, the cover portion 557 may become excessively enlarged, which may be contrary to the lightweighting and compactness of the armor wire 550.

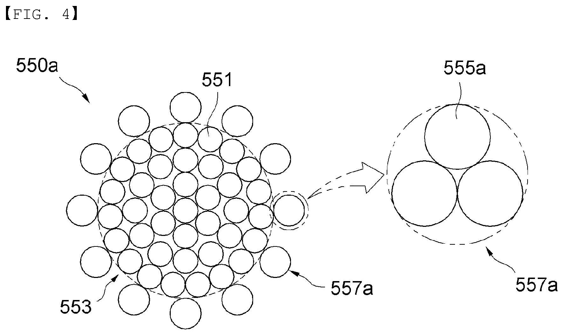

FIG. 4 is a cross-sectional view of an armor wire according to one modified example of the armor wire of FIG. 3.

Referring to FIG. 4, an armor wire 550a is generally the same as the armor wire 550 (see FIG. 3) of the embodiment described above, but differs in a second fiber 555a.

A plurality of second fibers 555a may be provided. The plurality of second fibers 555a may be twisted. The plurality of twisted second fibers 555a allow the cover portion 557a to maintain a more stable shape. Such a cover portion 557a may protect or compress the core portion 553a with strong force. The plurality of second fibers 555a may be referred to as a bundle of second fibers.

The relationship in which D₁ is 40 to 80 times D₂ in the embodiment described above may also be satisfied in the present embodiment. As the second fiber bundle is employed, D₁ may have a value close to 40 times D₂. Alternatively, when the second fiber 555a is made thinner (having a smaller Denier) than the second fiber 555 (see FIG. 3) of the embodiment described above, D₁ may also have a value close to 80 times D₂.

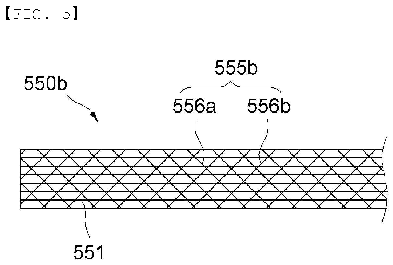

FIG. 5 is a front view of an armor wire according to another modified example of the armor wire of FIG. 2.

Referring to FIG. 5, a second fiber 555b of the armor wire 550b may have a 2-1 fiber 556 and a 2-2 fiber 557 that are transversely wound in different directions, unlike the embodiment described above.

When the 2-1 fiber 556 is transversely wound along a first direction relative to the core portion (first cover portion), the 2-2 fiber 557 may be transversely wound along a second direction (second cover portion). Here, the first direction and the second direction may be opposite to each other.

As the 2-1 fiber 556 and the 2-2 fiber 557 are transversely wound in opposite directions, the cover portion may maintain its shape more firmly. If necessary, each of the 2-1 fiber 556 and the 2-2 fiber 557 may be transversely wound to form a plurality of layers.

In an alternative embodiment, the first direction and the second direction are the same, but the pitch angles of the 2-1 fiber 556 and the 2-2 fiber 557 may be different.

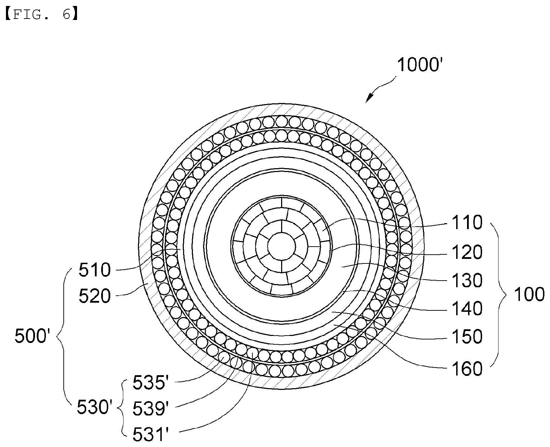

FIG. 6 is a cross-sectional view illustrating a configuration of a lightweight submarine cable according to one modified example of the lightweight submarine cable of FIG. 1.

Referring to FIG. 6, a lightweight submarine cable 1000' is generally identical to the lightweight submarine cable 1000 of the embodiment described above, but differs in an armor layer 530'.

The armor layer 530' may have a first armor layer 531' and a second armor layer 535'. When the first armor layer 531' is positioned close to the bedding layer 510, the second armor layer 535' may be disposed close to the outermost layer 520. An intermediate layer 539' may be additionally disposed between the first armor layer 531' and the second armor layer 535'. The intermediate layer 539' may be, for example, a non-woven tape transversely wound around the first armor layer 531'. The intermediate layer 539' secures the first armor layer 531' and allows the second armor layer 535' to be firmly bonded to the first armor layer 531'.

Each of the first armor layer 531' and the second armor layer 535' may be formed by the fiber assembly. In the first armor layer 531' and the second armor layer 535', the fiber assembly may be transversely wound along directions opposite to each other.

According to this configuration, the tensile strength of the armor layer 530' may be significantly improved compared to the embodiment described above. Such a submarine cable 1000' may be more suitable to be laid in deep water.

FIG. 7 is a cross-sectional view illustrating a configuration of a lightweight submarine cable according to another embodiment of the present invention.

Referring to FIG. 7, a lightweight submarine cable 1000" is generally the same as the lightweight submarine cable 1000 described above, but differs mainly in that it is a three-phase (AC) cable equipped with three power units 100.

The power units 100 are generally the same as those in the embodiment described above. The submarine cable 1000" may further be equipped with an optical unit 200 as needed. In that case, the submarine cable 1000" may be a composite cable in which power and information transmission occur simultaneously.

The optical unit 200 may have at least one optical fiber 211 and a tube 215 that accommodates the optical fiber 211. The optical unit 200 may have a predetermined number of optical fibers 211 mounted together with a filler material within the tube 215. The tube 215 may be made of a rigid material such as stainless steel. The optical unit 200 may further have a sheath 230 that surrounds the tube 215.

Meanwhile, the present drawing illustrates an example in which a single protective tube is provided inside a single sheath, but the present invention is not limited thereto. For example, a plurality of tubes may be provided inside a single sheath, and at least one optical fiber may be disposed inside each protective tube. In this case, the optical fiber and the tube may be surrounded in an outer sheath after they are all connected.

In addition to the power unit 100 and the optical unit 200, a shaped filler 300 may be additionally provided. The shaped filler 300 is positioned in relation to the power unit 100 and the optical unit 200 to maintain the roundness of the submarine cable 1000. The shaped filler 300 may also disperse the force acting on the cable to prevent damage or breakage of the power unit 100 and the optical unit 200 of the cable.

Specifically, the shaped filler 300 may be disposed between the power unit 100 and the protective unit 400 described later. The shaped filler 300 accommodates the optical unit 200 and may protect the optical unit 200 from external forces acting in cases such as installation.

The protective unit 400 may have a bedding layer 410 that surrounds the power unit 100 and the shaped filler 300 {and the optical unit 200}. The bedding layer 410 may be formed of polypropylene (PP) fibers, etc. To protect the power unit 100 and the optical unit 200, a filler material (not illustrated) may be additionally provided between the power unit 100 and, the optical unit 200 and the bedding layer 410. The outer surface of the cable is occupied by the outermost layer 420. The outermost layer 420 may be formed of a polymer material or have a composition generally identical to that of the bedding layer 410.

An armor layer 430 is provided between the bedding layer 410 and the outermost layer 420. The armor layer 430 may have the same configuration as the armor layers 530 and 530' in the embodiment described above.

### [Industrial Applicability]

The present invention has industrial applicability in the field of manufacturing a lightweight submarine cable.

## Claims

1. A lightweight submarine cable, comprising:
at least one power unit and a protective unit surrounding the at least one power unit,
wherein the power unit includes a conductor, an inner semi-conductive layer surrounding the conductor, an insulating layer surrounding the inner semi-conductive layer, an outer semi-conductive layer surrounding the insulating layer, and a metal shielding layer surrounding the outer semi-conductive layer,
the protective unit includes a bedding layer surrounding the at least one power unit, an armor layer surrounding the bedding layer, and an outermost layer surrounding the armor layer,
the armor layer includes a plurality of armor wires transversely wound outside the bedding layer, and
the armor wire includes a core portion having a bundle of first fibers and a cover portion having a second fiber transversely wound around the core portion.

2. The lightweight submarine cable of claim 1, wherein, when a length of the armor wire is L and a length of the first fiber constituting the bundle of the first fibers is Lo, the following relationship expression is satisfied. $1 \leq Lo / L \leq 1.01$

3. The lightweight submarine cable of claim 1, wherein the bundle of the first fibers is formed by straight-plying a plurality of first fibers.

4. The lightweight submarine cable of claim 1, wherein the armor wire is formed by transversely winding the second fiber while the bundle of the first fibers is being pulled in a longitudinal direction.

5. The lightweight submarine cable of claim 1, wherein the second fiber is transversely wound while pulled in a longitudinal direction.

6. The lightweight submarine cable of claim 1, wherein the armor wire has a space factor of 80% or more.

7. The lightweight submarine cable of claim 1, wherein the second fiber is transversely wound around the first fiber at a pitch angle of 3° or more.

8. The lightweight submarine cable of claim 1, wherein the second fiber is provided in a bundle, and
the bundle of the second fibers is formed by twisting a plurality of second fibers.

9. The lightweight submarine cable of claim 1, wherein the second fiber includes a 2-1 fiber and a 2-2 fiber, and
the cover portion includes a first cover portion in which the 2-1 fiber is transversely wound around the core portion along a first direction, and a second cover portion in which the 2-2 fiber is transversely wound around the core portion along a second direction.

10. The lightweight submarine cable of claim 1, wherein the first fiber is formed of at least one of aramid and UHMWPE.

11. The lightweight submarine cable of claim 1, wherein the second fiber is formed of at least one of aramid, UHMWPE, PET, glass fiber, and carbon fiber.

12. The lightweight submarine cable of claim 1, wherein a diameter of the core portion is 40 to 80 times that of the cover portion.

13. The lightweight submarine cable of claim 1, wherein the first fiber and the second fiber are the same type of fiber.

14. The lightweight submarine cable of claim 1, wherein the power unit further includes a polymer sheath surrounding the metal shielding layer.

15. An armor wire for surrounding a power unit of a submarine cable to form an armor layer, the armor wire comprising:
a core portion having a bundle of first fibers; and
a cover portion having a second fiber that is transversely wound around the core portion.

16. The armor wire of claim 15, wherein while a bundle of the first fibers is being pulled in a longitudinal direction, the second fiber is transversely wound around the bundle of the first fibers in a state that the second fiber is pulled in the longitudinal direction.

17. The armor wire of claim 15, wherein the bundle of the first fibers is formed by straight-plying a plurality of first fibers.

18. The armor wire of claim 15, wherein the second fiber is provided in a bundle, and
the bundle of the second fibers is formed by twisting a plurality of second fibers.

19. The armor wire of claim 15, wherein the second fiber is provided in a bundle,
the bundle of second fibers includes a 2-1 fiber bundle and a 2-2 fiber bundle, and
the cover portion includes a first cover portion in which the bundle of the 2-1 fiber bundle is transversely wound around the core portion along a first direction, and a second cover portion in which the bundle of the 2-2 fiber bundle is transversely wound around the core portion along a second direction.

20. A lightweight submarine cable, comprising:
at least one power unit and a protective unit surrounding the at least one power unit,
wherein the power unit includes a conductor, an inner semi-conductive layer surrounding the conductor, an insulating layer surrounding the inner semi-conductive layer, an outer semi-conductive layer surrounding the insulating layer, and a metal shielding layer surrounding the outer semi-conductive layer,
the protective unit includes a bedding layer surrounding the at least one power unit, an armor layer surrounding the bedding layer, and an outermost layer surrounding the armor layer,
the armor layer includes a plurality of armor wires transversely wound outside the bedding layer,
the armor wire includes a fiber assembly in which a first fiber and a second fiber are combined, and
the second fiber is transversely wound around the first fiber to compress the first fiber.

21. The lightweight submarine cable of claim 20, wherein, when a length of the armor wire is L and a length of the first fiber constituting a bundle of the first fibers is Lo, the following relationship expression is satisfied. $1 \leq Lo / L \leq 1.01$

22. The lightweight submarine cable of claim 20, wherein the armor wire is formed by transversely winding the second fiber around the first fiber while the first fiber is being pulled in a longitudinal direction and the second fiber is being pulled in the longitudinal direction relative to the first fiber.

23. The lightweight submarine cable of claim 20, wherein the second fiber is transversely wound around the first fiber at a pitch angle of 3° or more.

24. The lightweight submarine cable of claim 20, wherein the first fiber and the second fiber are the same type of fiber.
